# FASCICULE DE BREVET EUROPEEN

(11) **EP 2 743 147 B1**
(45) Date de publication et mention de la délivrance du brevet: **07.09.2016**
(21) Numéro de dépôt: 13197883.5
(22) Date de dépôt: 17.12.2013
(51) Int. Cl.: B60S 1/34, B60S 1/32, B60S 1/38

(54) **Bras porte-balai à cinématique pantographe**
Scheibenwischerarm mit Pendelbewegung
Wiper arm with pantograph kinematics

(30) Priorité: 17.12.2012 FR 1262182
(43) Date de publication de la demande: 18.06.2014
(73) Titulaire: Valeo Systèmes d'Essuyage, 78321 Le Mesnil Saint Denis (FR)
(72) Inventeur: Caillot, Gérald, 78720 CERNAY LA VILLE (FR)
(74) Mandataire: Léveillé, Christophe

(56) Documents cités:
- DE-A1- 10 341 280
- DE-A1- 19 957 741
- FR-A1- 2 761 322
- GB-A- 2 140 287

## Description

La présente invention a pour objet un bras porte-balai à cinématique pantographe.

Elle est destinée, notamment mais non exclusivement, à équiper les véhicules automobiles comportant un pare-brise panoramique.

On sait que les pare-brises panoramiques comprennent généralement des portions à faible courbure telles que la portion centrale et des portions à forte courbure telles que les portions situées aux extrémités. Un essuyage efficace des pare-brises panoramiques ne peut donc être réalisé en utilisant un essuie-glace classique pour lequel la trajectoire du balai est circulaire sur toute la surface du pare-brise. Un essuie-glace de type pantographe permet d'optimiser l'efficacité du balayage en accédant à toutes les portions du pare-brise panoramique grâce à sa structure et à sa cinématique spécifiques qui permettent d'imprimer au balai d'essuie-glace une trajectoire non circulaire sur au moins certaines portions du pare-brise, dont notamment ces portions situées aux extrémités. Un essuie-glace de ce type comporte généralement un bras comprenant deux tiges sensiblement parallèles l'une par rapport à l'autre en position de repos, qui s'étendent sensiblement dans le même plan, et un balai généralement monté mobile en pivotement par rapport au bras. L'existence d'un seul bras au lieu de deux bras pour les essuie-glaces classiques permet également de procéder à une économie de coûts.

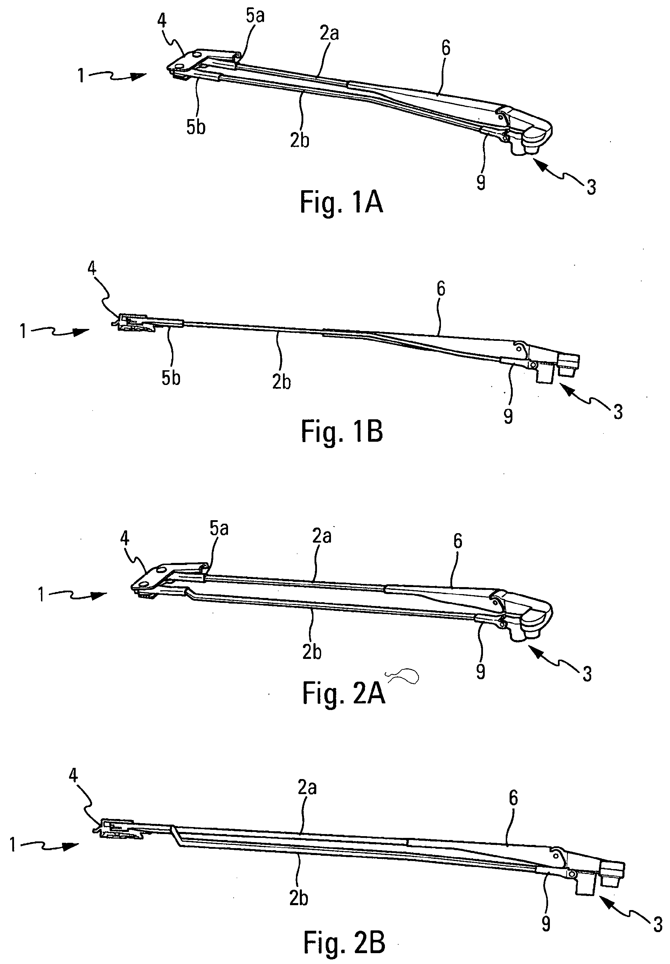

Plus précisément, à titre d'exemple, tel que cela est représenté sur les figures 1A et 1B, un essuie-glace de type pantographe comporte généralement un bras 1 comprenant une tige principale 2a et une tige secondaire 2b axées longitudinalement, sensiblement parallèles l'une par rapport à l'autre en position de repos, et qui s'étendent, au moins partiellement, sensiblement dans le même plan.

Le bras 1 comporte à l'une de ses extrémités longitudinales au moins un pivot 3 lui permettant de pivoter généralement autour d'un axe sensiblement perpendiculaire à un plan grossièrement défini par la surface à nettoyer.

En l'espèce, la tige principale 2a est reliée à cette extrémité longitudinale au moyen d'un manchon 6.

Le bras 1 comporte à son autre extrémité longitudinale au moins un élément de liaison 4 permettant d'une part de relier entre elles les deux tiges 2a, 2b, et d'autre part de connecter un balai (non représenté). Cet élément de liaison 4 est fixé aux tiges 2a, 2b par l'intermédiaire de deux manchons cylindriques 5a, 5b conformés de façon à pouvoir y introduire l'une des extrémités desdites tiges 2a, 2b. La tige secondaire 2b est d'une part, reliée par l'intermédiaire du manchon 5b audit élément de liaison 4 et d'autre part, reliée à l'extrémité longitudinale du bras 1 comportant ledit pivot 3 au moyen d'un manchon cylindrique 9 du type susdit.

Selon une variante, les manchons 5a et 6 et la tige principale 2a sont d'un seul tenant. De même, les manchons 5b et 9 et la tige secondaire 2b peuvent également être d'un seul tenant.

Un moteur électrique (non représenté) permet d'assurer le pivotement du bras 1 qui génère un mouvement de balayage alterné. Néanmoins, ces essuie-glaces de type pantographe souffrent d'un déficit de performances aérodynamiques affectant l'efficacité de leur essuyage en raison notamment d'une insuffisance de l'intensité des forces de plaquage dudit bras contre le pare-brise.

DE-A-10341280 montre le preambule de la revendication 1.

La présente invention a notamment pour objet de remédier à cet inconvénient majeur en proposant un bras porte-balai de type pantographe, conformé de manière à améliorer ses performances aérodynamiques afin notamment d'optimiser le plaquage du bras contre la surface à essuyer qui consiste généralement en un pare-brise.

A cet effet, elle propose un bras porte-balai à cinématique pantographe, comprenant une tige principale et une tige secondaire, caractérisé en ce que chacune desdites tiges principale et secondaire comporte un profil de surface déportante dont la section transversale est délimitée par un côté supérieur, un côté inférieur et dans le sens d'écoulement du flux d'air, un bord antérieur dit d'attaque et un bord postérieur dit de fuite opposé au bord d'attaque,
et en ce que, en position montée sur un véhicule, le bras est positionné par rapport à la surface à essuyer du véhicule de sorte que lesdits côtés inférieurs des sections transversales des tiges soient dirigés vers la surface à essuyer, de façon à renforcer le plaquage du bras contre la surface à essuyer.

Ladite section transversale de la tige principale ainsi que celle de la tige secondaire présentent ainsi sensiblement la forme d'un profil d'aile d'avion ayant fait l'objet d'une symétrie par rapport à un plan médian, les côtés inférieurs et supérieurs pouvant respectivement être considérés comme les extrados et les intrados des tiges. De cette façon et de manière avantageuse, la surface du profil des tiges devient déportante, ce qui permet d'optimiser le plaquage dudit bras contre la surface à essuyer. La déportance de la surface du profil des tiges résulte du fait que l'écoulement du flux d'air se divise au niveau du point d'arrêt amont en :
- une partie qui s'écoule le long dudit côté inférieur qui est conformé d'une façon telle qu'il provoque une accélération du flux, ce qui génère une dépression ;
- une partie qui s'écoule le long du côté supérieur qui est conformé d'une façon telle qu'il provoque un ralentissement du flux, ce qui génère une surpression.

La différence de pression ainsi créée entre le côté inférieur et le côté supérieur produit une résultante de forces ou déportance qui permet avantageusement de plaquer le bras contre la surface à essuyer.

Selon une variante d'exécution de l'invention, en position montée sur le véhicule, les tiges principale et secondaire sont positionnées l'une par rapport à l'autre de sorte que par rapport à un même plan de section transversale sensiblement orthogonal à la surface à essuyer, la tige principale et la tige secondaire soient décalées horizontalement l'une par rapport à l'autre de façon à ce que le bord d'attaque de la tige secondaire soit situé en amont du bord d'attaque de la tige principale, par rapport audit sens de l'écoulement du flux d'air sur la surface à essuyer. Le bord d'attaque de la tige secondaire se trouve ainsi généralement être le premier des bords à se trouver au contact du flux d'air s'écoulant sur ou à proximité de la surface à nettoyer lorsque le véhicule la comprenant se déplace.

Ce décalage horizontal permet avantageusement au flux s'écoulant à proximité de la partie du côté supérieur de la tige secondaire située en amont de ne pas être perturbé par la tige principale.

Selon une variante d'exécution de l'invention, en position montée sur le véhicule, les tiges principale et secondaire sont positionnées l'une par rapport à l'autre de sorte que par rapport à un même plan de section transversale sensiblement orthogonal à la surface à essuyer, la tige principale et la tige secondaire soient décalées verticalement l'une par rapport à l'autre de façon à créer entre elles un canal d'écoulement à l'intérieur duquel se crée une dépression par effet Venturi.

D'autres caractéristiques et avantages de la présente invention apparaîtront à la lumière des exemples qui vont suivre et des figures ci-annexées, lesdits exemples et figures étant donnés à titre illustratif et nullement limitatif.
La figure 1A, déjà décrite, est une vue d'un bras d'essuie-glace de type pantographe de l'art antérieur, décrit ci-dessus.
La figure 1B, déjà décrite, est une vue du bras d'essuie-glace de type pantographe représenté sur la figure 1A, selon un côté longitudinal.
La figure 2A est une vue d'un bras porte-balai de type pantographe selon l'invention.
La figure 2B est une vue du bras porte-balai de type pantographe représenté sur la figure 2A, selon un côté longitudinal.
La figure 3 est une vue schématique, selon une même coupe transversale, de la tige principale et de la tige secondaire du bras porte-balai selon l'invention.
La figure 4 est une vue schématique, selon une même coupe transversale, de la tige principale et de la tige secondaire du bras porte-balai selon l'invention, avec une mise en évidence de l'axe de support de chacune de ces deux tiges.

Pour des raisons de clarté, seuls les éléments essentiels pour la compréhension de l'invention ont été représentés de manière schématique, et ceci sans respect de l'échelle.

Dans un souci de bonne compréhension, dans la suite de l'exposé, les éléments communs aux différentes figures portent les mêmes références.

Le bras porte-balai selon l'invention, tel que cela est représenté sur les figures 2A et 2B, comprend un bras 1 destiné à être déplacé suivant un mouvement de rotation alterné, autour d'un axe dit de balayage généralement sensiblement perpendiculaire à la surface à essuyer (non représentée). Ce bras 1 comporte une tige principale 2a et une tige secondaire 2b qui sont en l'espèce axées longitudinalement et sensiblement parallèles l'une à l'autre.

Dans cet exemple non limitatif, le bras 1 comprend :
- au moins un pivot 3 du type susdit situé à l'une de ses extrémités longitudinales ;
- au moins un élément de liaison 4 du type susdit situé à son autre extrémité longitudinale auquel peut être notamment relié un balai d'essuyage (non représenté) ;
- au moins un manchon 6 du type susdit permettant de relier la tige principale 2a à l'extrémité longitudinale comportant ledit pivot 3 ;
- au moins deux manchons cylindriques 5a, 5b du type susdit qui permettent de fixer respectivement la tige secondaire 2b et la tige principale 2a audit élément de liaison 4 ;
- au moins un manchon 9 du type susdit qui permet de relier la tige secondaire 2b à l'extrémité longitudinale comportant le pivot 3.

Selon une variante d'exécution de l'invention, les manchons 5a et 6 et la tige principale 2a sont d'un seul tenant. De même, les manchons 5b et 9 et la tige secondaire 2b peuvent également être d'un seul tenant.

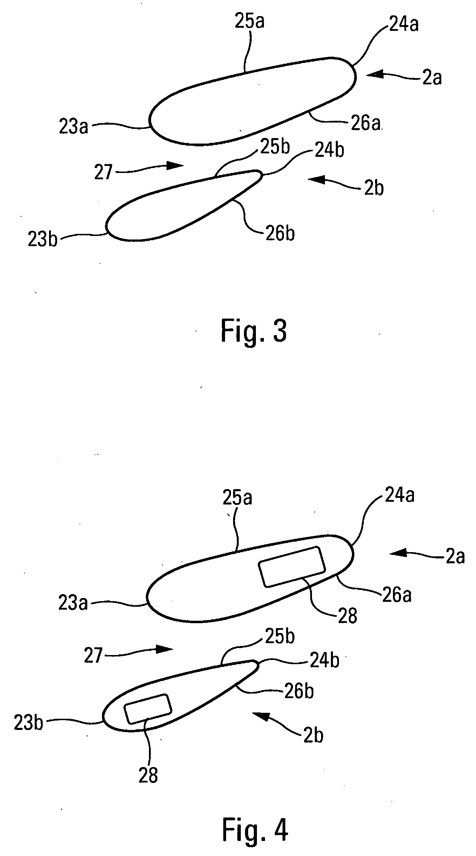

Tel que cela est représenté sur les figures 3 et 4, la section transversale et latérale de la tige principale 2a et la tige secondaire 2b comporte un côté supérieur 25a, 25b et un côté inférieur 26a, 26b ainsi que, dans le sens d'écoulement d'un flux d'air, un bord antérieur 23a, 23b dit d'attaque et un bord postérieur 24a, 24b dit de fuite opposé au bord d'attaque 23a, 23b.

Préférentiellement, en position montée sur le véhicule, les tiges principale 2a et secondaire 2b sont positionnées l'une par rapport à l'autre de sorte que par rapport à un même plan de section transversale sensiblement orthogonal à la surface à essuyer, les côtés inférieurs 26a, 26b des tiges 2a, 2b soient dirigés vers la surface à essuyer.

En outre, la longueur desdits côtés inférieurs 26a, 26b est respectivement plus grande que celle des côtes supérieurs 25a, 25b. Préférentiellement, les côtés inférieurs 26a, 26b présentent une forme bombée qui leur permet d'être plus longs que les côtés supérieurs 25a, 25b.

De cette façon, le profil des tiges principale 2a et secondaire 2b présente une surface déportante, ce qui se traduit notamment par la création à proximité desdits côtés inférieurs 26a, 26b de zones de dépression.

Le flux d'air au niveau du point d'arrêt amont se scinde en :
- une partie qui s'écoule le long de chacun desdits côté inférieur 26a, 26b qui se trouve accélérée en raison de leur forme bombée qui contraint cette partie du flux d'air à suivre un parcours plus long ; cette accélération de cette partie du flux permet de générer au moins une zone de dépression à proximité de chacun des côtés inférieurs 26a, 26b ;
- une partie qui s'écoule le long de chacun desdits côtés supérieurs 25a, 25b qui se trouve ralentie en raison d'une distance de parcours plus courte que sur les côtés inférieurs 26a, 26b ; le ralentissement de cette partie du flux permet de générer au moins une zone de surpression à proximité de chacun des côtés supérieurs 25a, 25b.

La différence de pression ainsi créée entre chacun des côtés inférieurs 26a, 26b et chacun des côtés supérieurs 25a, 25b produit une résultante de forces ou déportance dirigée vers la surface à essuyer qui permet avantageusement d'optimiser le plaquage dudit bras 1 contre cette surface à essuyer.

Selon une variante d'exécution de l'invention, en position montée sur le véhicule, les tiges principale 2a et secondaire 2b sont positionnées l'une par rapport à l'autre de sorte que par rapport à un même plan de section transversale sensiblement orthogonal à la surface à essuyer, la tige principale 2a et la tige secondaire 2b soient décalées horizontalement l'une par rapport à l'autre de façon à ce que le bord d'attaque 23b de la tige secondaire 2b soit situé en amont du bord d'attaque 23a de la tige principale 2a, par rapport au sens de l'écoulement normal du flux d'air sur la surface à essuyer. Le bord d'attaque 23b de la tige secondaire 2b se trouve ainsi généralement être le premier des bords à se trouver au contact du flux d'air s'écoulant sur ou à proximité de la surface à nettoyer lorsque le véhicule la comprenant se déplace.

De cette façon, le flux d'air s'écoulant sur ou à proximité de la surface à nettoyer lorsque le véhicule la comprenant se déplace, frappe d'abord le bord d'attaque 23b de la tige secondaire 2b puis ensuite le bord d'attaque 23a de la tige principale 2a. Il en résulte que la zone de surpression qui se crée à proximité du bord d'attaque 23b de la tige secondaire 2b n'interfère pas avec la zone de dépression qui se crée à proximité du bord d'attaque 23a de la tige principale 2a.

Selon une variante d'exécution de l'invention, en position montée sur le véhicule, les tiges principale 2a et secondaire 2b sont positionnées l'une par rapport à l'autre de sorte que par rapport à un même plan de section transversale sensiblement orthogonal à la surface à essuyer, la tige principale 2a et la tige secondaire 2b soient décalées verticalement l'une par rapport à l'autre de façon à créer entre elles un canal d'écoulement 27 à l'intérieur duquel se crée une dépression par effet Venturi, le flux d'air se trouvant accéléré lors de son passage dans le canal 27. Avantageusement, ledit décalage horizontal entre les tiges 2a, 2b permet à la partie de la tige secondaire 2b située en amont de la tige principale 2a de ne pas subir les effets générés lors du passage du flux d'air dans le canal d'écoulement 27. De plus, l'effet Venturi accélère le flux d'air circulant à proximité du côté inférieur 26a, ce qui augmente la déportance de la tige principale 2a. En outre, en raison de ce décalage horizontal entre les tiges 2a et 2b, l'accélération du flux n'affecte pas la partie arrière du côté supérieur 25b, ce qui permet d'éviter la création d'une portance sur la tige 2b. Enfin, les deux tiges 2a, 2b du bras 1 demeurent sensiblement parallèles au cours des mouvements du bras 1, ce qui assure un effet Venturi constant.

Le profil de chaque tige 2a, 2b peut être plein ou creux et être réalisé à titre d'exemple en matière plastique pouvant être de type composite, en un alliage à base de magnésium, ou en aluminium. Les profils creux des tiges 2a, 2b peuvent être réalisés notamment mais non exclusivement en mettant en oeuvre un procédé d'hydroformage, d'emboutissage d'une plaque en tôle ou par déformation d'un tube creux rectiligne.

Préférentiellement, chaque tige 2a, 2b comporte classiquement un axe de support 28 pouvant être entouré par un profil plein du type susdit disposé autour de l'axe 28 par exemple par injection. Les profils desdites tiges 2a, 2b peuvent également être disposés autour des axes de support 28 par surmoulage.

L'axe de support 28 présente préférentiellement une section transversale sensiblement rectangulaire. Toutefois, la forme de la section transversale de l'axe de support 28 peut varier en fonction de contraintes liées notamment à la qualité du surmoulage ou aux conditions d'enclipsage du profil spécifique des tiges 2a, 2b.

Selon une autre variante d'exécution de l'invention, le profil spécifique de chaque tige 2a, 2b peut consister respectivement en une ou plusieurs pièces indépendantes pouvant être fixées à l'axe 28 desdites tiges 2a, 2b par exemple par enclipsage.

Préférentiellement, les tiges 2a et 2b sont conformées de manière à comporter chacune au moins un logement (non représenté) axé longitudinalement permettant le passage de tuyaux, tels que celui permettant de guider l'écoulement du fluide de nettoyage et/ou de dégivrage, et/ou des fils tels que les fils électriques destinés à permettre au balai d'être chauffant.

## Revendications

1. Bras (1) porte-balai à cinématique pantographe, comprenant une tige principale (2a) et une tige secondaire (2b),
**caractérisé en ce que** chacune desdites tiges principale (2a) et secondaire (2b) comporte un profil de surface déportante dont la section transversale est délimitée par un côté supérieur (25a, 25b), un côté inférieur (26a, 26b), et dans le sens d'écoulement du flux d'air, un bord antérieur (23a, 23b) dit d'attaque et un bord postérieur (24a, 24b) dit de fuite opposé au bord d'attaque (23a, 23b),
et **en ce que**, en position montée sur un véhicule, le bras (1) est positionné par rapport à la surface à essuyer du véhicule de sorte que lesdits côtés inférieurs (26a, 26b) des sections transversales des tiges (2a, 2b) soient dirigés vers la surface à essuyer, de façon à renforcer le plaquage du bras (1) contre la surface à essuyer.

2. Bras (1) porte-balai selon la revendication 1,
**caractérisé en ce que**, en position montée sur le véhicule, les tiges principale (2a) et secondaire (2b) sont positionnées l'une par rapport à l'autre de sorte que par rapport à un même plan de section transversale sensiblement orthogonal à la surface à essuyer, la tige principale (2a) et la tige secondaire (2b) soient décalées verticalement l'une par rapport à l'autre de façon à créer entre elles un canal d'écoulement (27) à l'intérieur duquel se crée une dépression.

3. Bras (1) porte-balai selon l'une des revendications 1 ou 2,
**caractérisé en ce que**, en position montée sur le véhicule, les tiges principale (2a) et secondaire (2b) sont positionnées l'une par rapport à l'autre de sorte que le bord antérieur d'attaque (23b) de la tige secondaire (2b) soit situé en amont du bord d'attaque (23a) de la tige principale (2a), par rapport audit sens de l'écoulement du flux d'air sur la surface à essuyer.

4. Bras (1) porte-balai selon l'une des revendications 1 à 3,
**caractérisé en ce que** le profil de chaque tige (2a, 2b) est réalisé en aluminium ou en un alliage à base de magnésium.

5. Bras (1) porte-balai selon l'une des revendications précédentes,
**caractérisé en ce que** chaque tige (2a, 2b) comprend un axe de support (28) autour duquel le profil spécifique de la tige (2a, 2b) est disposé par surmoulage.

6. Bras (1) porte-balai selon l'une des revendications 1 à 4,
**caractérisé en ce que** le profil de chaque tige (2a, 2b) est creux et réalisé en mettant en oeuvre un procédé d'hydroformage, d'emboutissage d'une plaque en tôle ou par déformation d'un tube creux rectiligne.

7. Bras (1) porte-balai selon l'une des revendications 1 à 4,
**caractérisé en ce que** le profil spécifique de chaque tige (2a, 2b) consiste respectivement en une ou plusieurs pièces indépendantes.

8. Bras (1) porte-balai selon la revendication 7,
**caractérisé en ce que** chaque tige (2a, 2b) comporte un axe de support (28) auquel la ou les pièces indépendantes sont fixées de façon déconnectable.

9. Bras (1) porte-balai selon la revendication 8,
**caractérisé en ce que** la ou les pièces indépendantes sont fixées de façon déconnectable à l'axe (28) desdites tiges (2a, 2b) par enclipsage.

## Patentansprüche

1. Arm (1) zum Tragen eines Scheibenwischerblatts mit Pantograph-Kinematik, umfassend eine Hauptstange (2a) und sekundäre Stange (2b),
**dadurch gekennzeichnet, dass** die Hauptstange (2a) und die sekundäre Stange (2b) jeweils ein Profil mit versetzter Oberfläche aufweisen, dessen Querschnitt durch eine Oberseite (25a, 25b), eine Unterseite (26a, 26b), und in der Strömungsrichtung des Luftstroms, einen vorderen Rand (23a, 23b), genannt Eintrittsrand, und einen hinteren Rand (24a, 24b), genannt Austrittsrand, der dem Eintrittsrand (23a, 23b) gegenüberliegt, begrenzt ist,
und dass der Arm (1) in an einem Fahrzeug montierter Position bezogen auf die zu wischende Fläche des Fahrzeugs dergestalt positioniert ist, dass die Unterseiten (26a, 26b) der Querschnitte der Stangen (2a, 2b) zu der zu wischenden Fläche gerichtet sind, um den Arm (1) fester gegen die zu wischende Fläche zu drücken.

2. Arm (1) zum Tragen eines Scheibenwischerblatts nach Anspruch 1,
**dadurch gekennzeichnet, dass** die Hauptstange (2a) und die sekundäre Stange (2b) in am Fahrzeug montierter Position dergestalt zueinander positioniert sind, dass die Hauptstange (2a) und die sekundäre Stange (2b) bezogen auf eine gleiche Querschnittsebene, die zur zu wischenden Fläche im Wesentlichen orthogonal ist, vertikal zueinander versetzt sind, dergestalt, dass zwischen ihnen ein Strömungskanal (27) geschaffen wird, in dem ein Unterdruck entsteht.

3. Arm (1) zum Tragen eines Scheibenwischerblatts nach einem der Ansprüche 1 oder 2,
**dadurch gekennzeichnet, dass** die Hauptstange (2a) und die sekundäre Stange (2b) in am Fahrzeug montierter Position dergestalt zueinander positioniert sind, dass sich der vordere Eintrittsrand (23b) der sekundären Stange (2b) bezogen auf die Strömungsrichtung des Luftstroms auf die zu wischende Fläche stromauf des Eintrittsrands (23a) der Hauptstange (2a) befindet.

4. Arm (1) zum Tragen eines Scheibenwischerblatts nach einem der Ansprüche 1 bis 3,
**dadurch gekennzeichnet, dass** das Profil jeder Stange (2a, 2b) aus Aluminium oder aus einer Legierung auf Basis von Magnesium hergestellt ist.

5. Arm (1) zum Tragen eines Scheibenwischerblatts nach einem der vorhergehenden Ansprüche,
**dadurch gekennzeichnet, dass** jede Stange (2a, 2b) eine Tragachse (28) umfasst, um die das spezifische Profil der Stange (2a, 2b) durch Einspritzen angeordnet ist.

6. Arm (1) zum Tragen eines Scheibenwischerblatts nach einem der Ansprüche 1 bis 4,
**dadurch gekennzeichnet, dass** das Profil jeder Stange (2a, 2b) hohl ist und durch Anwenden eines Hydroforming-Verfahrens, eines Verfahrens zum Tiefziehen eines Bleches oder durch Umformen eines geradlinigen Hohlrohrs hergestellt ist.

7. Arm (1) zum Tragen eines Scheibenwischerblatts nach einem der Ansprüche 1 bis 4,
**dadurch gekennzeichnet, dass** das spezifische Profil jeder Stange (2a, 2b) jeweils aus einem oder mehreren unabhängigen Teilen besteht.

8. Arm (1) zum Tragen eines Scheibenwischerblatts nach Anspruch 7,
**dadurch gekennzeichnet, dass** jede Stange (2a, 2b) eine Tragachse (28) aufweist, an der das oder die unabhängigen Teile auf lösbare Weise befestigt sind.

9. Arm (1) zum Tragen eines Scheibenwischerblatts nach Anspruch 8,
**dadurch gekennzeichnet, dass** das oder die unabhängigen Teile mittels Schnappverbindung lösbar an der Achse (28) der Stangen (2a, 2b) befestigt sind.

## Claims

1. Wiper arm (1) with pantograph dynamic action, comprising a main rod (2a) and a secondary rod (2b),
**characterized in that** of the said main rod (2a) and secondary rod (2b) each comprises a negative lift surface profile the cross section of which is delimited by an upper side (25a, 25b), a lower side (26a, 26b), and, in the direction of the air flow, an anterior edge (23a, 23b) referred to as the leading edge and a posterior edge (24a, 24b) referred to as the trailing edge opposite the leading edge (23a, 23b),
and **in that**, in the position as mounted on a vehicle, the arm (1) is positioned with respect to the vehicle surface that is to be wiped in such a way that the said lower sides (26a, 26b) of the cross sections of the rods (2a, 2b) face towards the surface that is to be wiped, so as to press the arm (1) more firmly against the surface that is to be wiped.

2. Wiper arm (1) according to Claim 1, **characterized in that**, in the position as mounted on the vehicle, the main rod (2a) and secondary rod (2b) are positioned relative to one another such that with respect to one and the same plane of cross section substantially orthogonal to the surface that is to be wiped, the main rod (2a) and the secondary rod (2b) are offset vertically relative to one another so as to create between them a flow duct (27) in which a depression is created.

3. Wiper arm (1) according to either of Claims 1 and 2,
**characterized in that**, in the position as mounted on the vehicle, the main rod (2a) and secondary rod (2b) are positioned relative to one another such that the anterior leading edge (23b) of the secondary rod (2b) is situated upstream of the leading edge (23a) of the main rod (2a) in relation to the said direction in which the air flows over the surface that is to be wiped.

4. Wiper arm (1) according to one of Claims 1 to 3,
**characterized in that** the profile of each rod (2a, 2b) is made of aluminium or of a magnesium-based alloy.

5. Wiper arm (1) according to one of the preceding claims, **characterized in that** each rod (2a, 2b) comprises a support stick (28) around which the specific profile of the rod (2a, 2b) is configured by overmoulding.

6. Wiper arm (1) according to one of Claims 1 to 4,
**characterized in that** the profile of each rod (2a, 2b) is hollow and produced using a method of hydroforming or pressing a metal sheet or by deforming a straight hollow tube.

7. Wiper arm (1) according to one of Claims 1 to 4,
**characterized in that** the specific profile of each rod (2a, 2b) consists respectively of one or more independent components.

8. Wiper arm (1) according to Claim 7,
**characterized in that** each rod (2a, 2b) comprises a support stick (28) to which the independent component or components are detachably attached.

9. Wiper arm (1) according to Claim 8,
**characterized in that** the independent component or components are detachably attached to the stick (28) of the said rods (2a, 2b) by clip fastening.
